**Europäisches Patentamt**

**European Patent Office**

**Office européen des brevets**

(19)

(11) Publication number: **0 038 703**
**A2**

(12) # EUROPEAN PATENT APPLICATION

(21) Application number: **81301745.6**

(22) Date of filing: **21.04.81**

(51) Int. Cl.³: **G 06 F 13/00**
**G 06 F 15/40**

(30) Priority: **22.04.80 US 142784**

(43) Date of publication of application:
**28.10.81 Bulletin 81/43**

(84) Designated Contracting States:
**DE FR GB IT**

(71) Applicant: **WESTINGHOUSE ELECTRIC CORPORATION**
**Westinghouse Building Gateway Center**
**Pittsburgh Pennsylvania 15222(US)**

(72) Inventor: **Fox, Richard, Quincy**
**1364 Campbell Street**
**Orlando Florida(US)**

(72) Inventor: **Merbach, Paul Christov**
**Rural Delivery 1 Box 240**
**Saxonburg Pennsylvania(US)**

(74) Representative: **van Berlyn, Ronald Gilbert**
**23, Centre Heights**
**London, NW3 6JG(GB)**

(54) **Solid state data acquisition and data retrieval system.**

(57) A solid state memory unit is used as a peripheral in a computer subsystem for storing or retrieval of sequential data classified into serially ordered groupings of files containing records. Each group of sequential data can be lengthened, shortened, amended, deleted, updated, and the entire data collection is immediately compressed to allow fast and sequential scanning for further treatement. The solid state memory unit is in the form of a printed card including microprocessor, programmed read-only memory and random access memory. This solid state memory unit accommodates easily and effectively error correction recovery.

EP 0 038 703 A2

FIG. 4

1
SOLID STATE DATA ACQUISITION AND
DATA RETRIEVAL SYSTEM

The invention relates generally to solid state systems for the storage and retrieval of digital data, and more particularly to computer peripheral systems.

Described herein is a system enabling the retrieving in sequential order of data belonging to any selected group of data previously received and classified into groups.

The system described herein is to be able to sequentially acquire or retrieve any length of sequential data pertaining to any selected group of data; the system is also able to use the inherent capability of a random-access-memory (RAM) device to insert new data at any moment within a chain of already ordered data, or to erase data, at any location therein, within a chain of already ordered data for establishing a new sequence of data to be selectively retrieved in accordance with a selected group thereof.

Also used along with the invention is a microprocessor in relation to a random-access-memory (RAM) device for writing and reading data in sequential order within respective groups in unpredetermined number and of unpredetermined length. Associated with the random-access-memory (RAM) device, and the microprocessor is a directory of groups of data and a series of data corresponding to such groups, both the directory and the data group being unpredetermined in contents and alterable at any given time.

An embodiment of the present invention is still to allows increase or decrease of the number of data groups and the data length of any such groups of data to be stored into, or retrieved from, a random-access-memory (RAM) device in accordance with a programmed-read-only-memory (PROM) device. Also provided is a solid state memory which is the functional equivalent of a floppy disc, thereby combining the advantages of a solid state device with the advantages of a floppy disc. Additionally disclosed herein is an improved peripheral memory for the local minicomputer of a numerical controlled machine.

The invention in its broad form resides in a peripheral memory system for adding and retrieving data, comprising: solid state memory means containing a plurality of different groupings of sequential data in a predetermined sequential grouping order; microprocessor means responsive to a command signal for collective treatment of sequential data belonging to one particular grouping of a particular order; all stored data belonging to groupings following said one particular grouping being moved in said solid state memory means in response to said command signal by a predetermined number of places forward when the treated sequential data are being added sequentially into said solid state memory means, and restored backward when the treated sequential data are being retrieved from said solid state memory means.

A preferred embodiment described herein consists in a solid state data acquisition and retrieval system comprising a solid state memory and a microprocessor responsive to command signals in the writing mode for storing into said memory and classifying sequential data in accordance to different data groupings and for retrieving from said memory in the reading mode classified sequential data pertaining to selected said groupings. More specifically, a programmable read-only-memory device (PROM) is associated with said microprocessor for treating sequential data within said solid state memory and through said microprocessor in accordance with said command. signals. The solid state memory device is preferably a random-access-memory (RAM) device.

The data acquisition and retrieval system according to the invention, preferably, is in the form of a printed circuit card including a microprocessor, a PROM device and a RAM device interconnected with bidirectional buses. Typically, the RAM memory provides 256,000 bytes. The overall memory capacity is the equivalent of 128,000 x 16 byte words. It is organized as a mass memory including data sequentially stored in variable length according to different records. The length of data in each record may vary from 1 to 240 bytes. Each data record is preceded by a double header, one counting the length of data in the preceding record, the second counting the length of data in the headed record. As a result, the microprocessor is able to address data forward and backward in the RAM memory.

All data stored into, or read from, the RAM memory, follow an entry file, or directory, of said RAM memory which has a variable length, typically of 240 bytes for reference to up to 80 subsequent files of data. The user accesses the RAM memory by making commands to the data acquisition and retrieval system. Thus, the system appears as a peripheral memory within a computer system. Up to four users, typically, may have access at the same time to such peripheral devices. The following user commands can be made:

1) _Open a file_ for a file of data in the RAM memory. The directory will have a record made of the newly opened file. At the same time, the microprocessor will transmit to the user the address of such newly designated file.

2) _Write data_. In accordance with the file designation from the user, the RAM memory will receive from the microprocessor the inputted data and have it stored in the corresponding file, first in line if it is

the first data, last in line if it is additional, data for such file. When this occurs, place for the stored data is found in the RAM memory by having all the other records of all the other files moved down in the memory, thereby providing space for the insertion of the new data between the old at the intended location. However, a new data need not be placed at the end of a chain. Categorization of the new information may require a higher priority, or a substitution for an older data. In such case, in accordance with the logic of the PROM device, the microprocessor will transmit the necessary command signal and amend the record by addition, insertion or substitution, as required by the programmed coded logic of the PROM memory.

The writing process is followed by the establishment of the header when the file is new or its amendment if data is added. The header indicates how many data follow in the memory and how many precede it. Therefore, header amendment requires amendments in two consecutive headers.

3) _Read data_. When such a command has been received from the user, the microprocessor reads data as stored and transmits the outputted data for the selected record to the user. When the data pertains to the same file, the data which are read follow sequentially within the same file of the RAM memory.

4) _Rewind a file_. This user command calls for going back to the front of the file being read.

5) _Close a file_. This command amounts to a release of a file, thus enabling other users to have access to the system.

6) _Erase a file_. With such a command, all data from a given file are erased, while all other files are automatically being moved up in the memory to close the space.

7) _Insert a record_. This command is used to insert data into a file. In such case, all files and all data following the point of insertion are moved further down in the memory by as much as necessary to allow space for the new data.

8) <u>Delete a file</u> is a command from the user to cause all remaining data of all other files to be moved up over the locations occupied by the deleted file. At the same time, the directory is updated to eliminate reference to the deleted file.

9) <u>List the directory</u>. This command causes a list of all the files with their identification and their starting addresses to be given by the microprocessor to the user.

The invention also provides in the data retrieval mode for the automatic correction of errors which could have occurred in the record. One source of such errors is the destruction of data due to alpha particles hitting the RAM memory when for maximum capacity the size of one bit is of about the same size as the charge of an $\alpha$-particle.

In this regard, a well-known method of recovery after failure consists in using the "Hamming code" technique, e.g. encryption by a polynomial equation. This method requires to reserve a number of bits for the detection of the error and the determination of the correction as a solution to matching the encoded data with the binary polynomial representation. Typically, for 16 bits of data, encryption requires 6 additional bits. Therefore, a 22 bit length is necessary to correct the error through the equation.

In contrast, the data acquisition system described, herein provides for a chain of data within a group which may be as long as 256 bits. With such a length the encryption will require 13 bits which is a very small fraction of the total length. Therefore, recovery after failure can be implemented at a small cost.

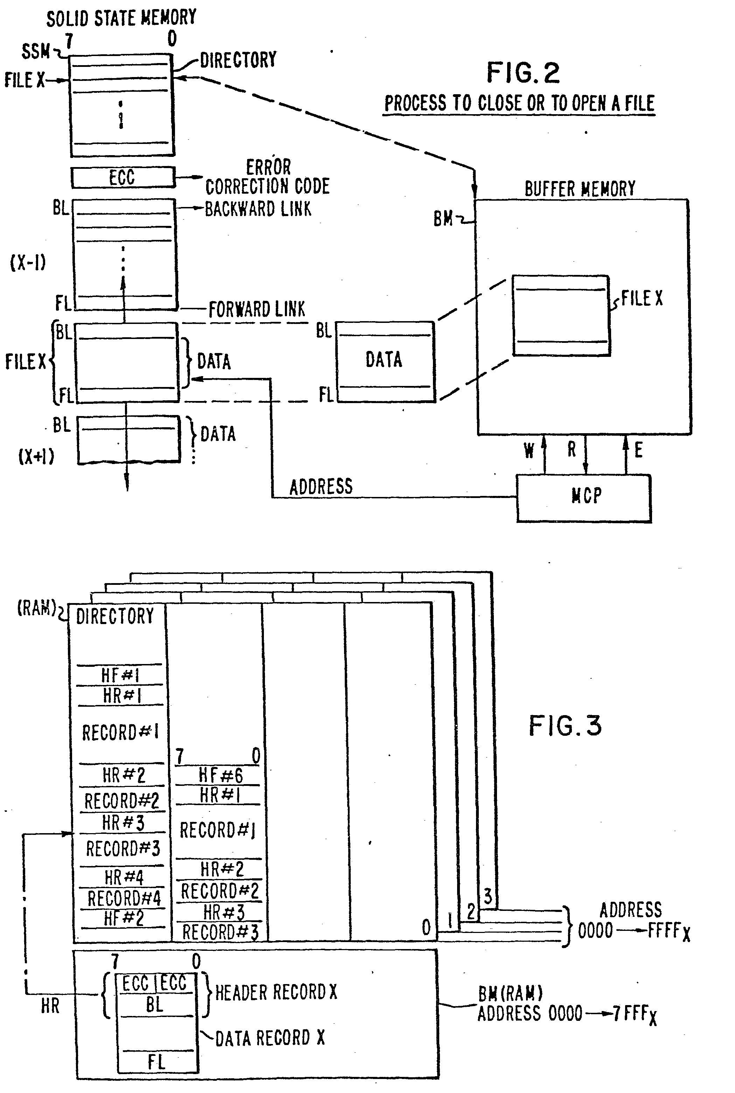

As described herein, in a data acquisition and retrieval system including a microprocessor, a PROM memory, a RAM memory, used 1) to store within the RAM memory data belonging to different records in sequential order and sequentially ordered within each of the respective files, and 2) to retrieve sequentially ordered data from said RAM memory, recovery after failure in the RAM memory is accomplished with bits reserved for correction and placed right behind the header before the first stored data thereof, while a binary polynomial equation for error correction is stored as firmware into the PROM memory. The microprocessor initiates the error correction procedure following a "Read" Command and the reading operation of data from the RAM device. The correction is read directly from the reserved portion (ECC in Figures 2 and 3) of the header where automatically appears the expected solution. The single bit errors are corrected. Also, double bit errors are detected.

Thus, for each data treatment the system provides an error correcting code per record. The error correcting code is accessed any time the record is read for external use. The error code is never accessed when there is merely an internal manipulation of data or files. This approach allows the microprocessor to move data more quickly by providing error correction only when requested. The error correction feature is integrated with micro-processing without necessitating any special and separate hardware to be allocated for the purpose of error correction code calculation in parallel with data movement.

The invention can be better understood from the following description of a preferred embodiment, given by way of example and to be studied in conjunction with the accompanying drawing in which:

Figure 1 is a schematic representation of data treatment within and out of a floppy disc, as typical of the prior art;

Fig. 2 is a schematic representation of data circulation within a solid state memory in accordance with an embodiment of the present invention;

Fig. 3 is illustrative of the internal organization of a random-access-memory in accordance with an embodiment of the present invention;

Fig. 4 shows in diagrammatic form the memory system according to an embodiment of the present invention;

Figs. 5A and 5B show control of the random-access-memory in accordance with an embodiment of the present invention.

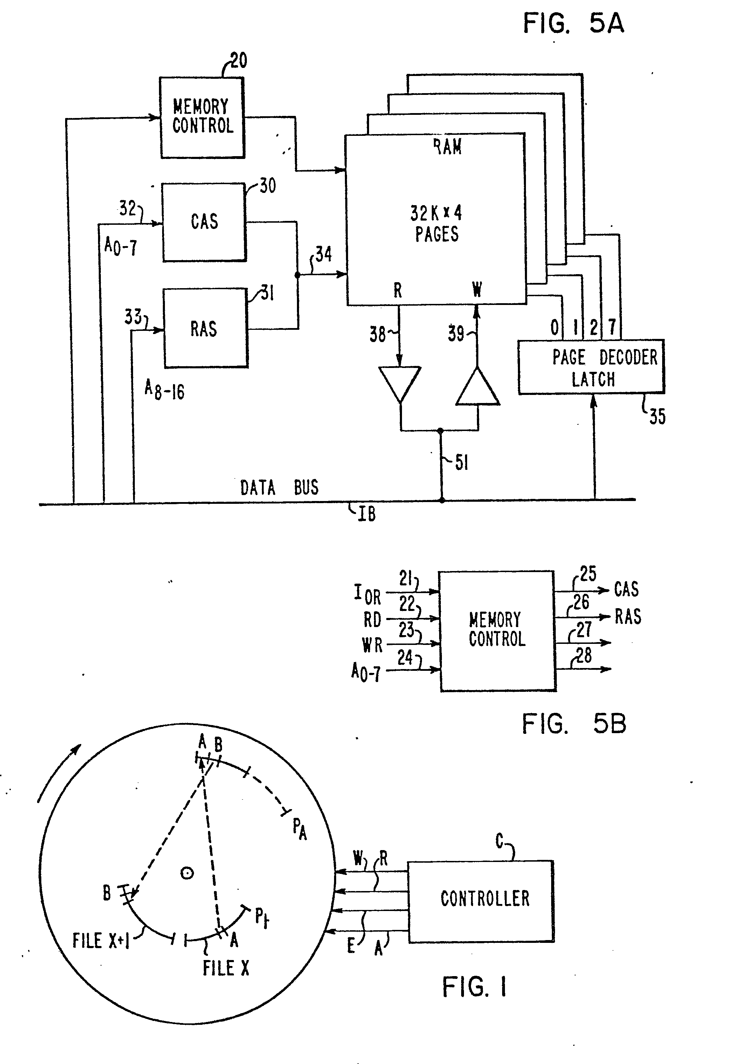

Referring to Fig. 1, a floppy disc of the prior art is shown to include data sequentially stored along concentrical circular paths such as $P_1$, which data A or B can be identified as belonging to successive segments of different lengths such as shown by File X and File X+1. A controller C associated with the floppy disc serves to write (W), read (R), erase (E) data in relation to files such as X and X+1, and in accordance with an address (A). Assume that a portion of the data (A) in file X needs to be retrieved from path $P_1$. Controller C will effect such retrieval, and if necessary the retrieved data can be put aside for later and stored into an auxiliary path $P_A$ while there is space available, unused. Assume now that data such as B, already set aside in path $P_A$, needs to be stored in file X+1 as shown in Fig. 1. These operations will require all the data to be displaced back and forth before segment B can be located in the proper order within file X+1 and within the same geographic position relative to file X and any other file or data already on the floppy disc. Moreover, treatment of data in the record, or data temporarily stored in path $P_A$ on a parking space, and more generally data erased or inserted, substituted or modified, all these require a considerable number of operations back and forth on the floppy disc. There will be total rearranging of the records if blank spaces and dispersed addressing are to be avoided. This is very slow, compared to the speed of computers. To this serious inconvenience, the floppy disc adds wear. Altogether, such a memory when used as a peripheral memory in a com-

puter system is disadvantageous despite the fact that a floppy disc is not costly.

Referring to Fig. 2 the same problem is considered as can be solved with a solid state memory device, such as a Random-Access-Memory (RAM), as described herein. To the solid state memory SSM is associated a buffer memory BM, which also can be a Random-Access-Memory device. The controller is represented as a microprocessor programmed by a Programmable Read-Only-Memory (PROM) device for instance.

Data, such as earlier mentioned in the example of Fig. 1, is shown sequentially ordered in files like (X-1), (X) and (X+1). Each record of data in sequential order is preceded by a reference, designated backward link BL, which indicates how many lines of data precedes it in the immediately preceding record. Each record of data is terminated by a reference, designated forward link FL, which indicates how many lines of data exist in the grouping immediately succeeding. The direction of scanning is in the order of the files. In front of the entire succession of files, the solid state memory SSM contains a directory which lists and identifies the files which are to follow. Therefore, upon a request to examine a file of data, the microprocessor MCP will look into the directory, find the file to be looked for, then proceed through the file of records until matching is done with the particular record before proceeding to the data line of interest. Despite gaps shown in the drawing of Fig. 2 between the files for the sake of clarity, it is understood that all the information stored in the solid state memory SSM is contiguous from one line to the next, thus, with no blank space, thereby allowing for review, scanning at maximum speed and with utmost density of information in the available space. While the microprocessor MCP may require to erase (E), or to store (W) data, the present invention provides for keeping the same overall compactness of stored information with a minimum of data manipulation in the solid state memory SSM. This is achieved, as shown illustratively in Fig. 2, with the assistance of a buffer memory BM.

Assume that the entire record X is to be taken away and stored into the buffer memory BM. This operation will leave an open space in the succession of files. At any rate, after reading out the data of record X in order to have it stored into BM, the data left in place between records (X-1) and (X+1) is no longer relevant. The microprocessor will accomplish this by reading out all data following record X, first storing them into the buffer memory BM, then, storing the same data all in sequential order back in the solid state memory but right after record (X-1). At the same time the forward link of record (X-1) will be changed to indicate the length of record (X+1), rather than record X previously. Also, the back link BL of record (X+1) will be changed to express the length of record (X-1) rather than record X previously. It remains to amend the directory so that reference to files after record X are correct. This is also performed with the assist of BM. These operations will have amounted to a complete moving upward of all data succeeding the withdrawn record X, and such move will have relocated the same distance as the size of the entire record X. The inverse operation would be to insert record X between records (X-1) and (X+1). Now, all the data below record (X-1) will be moved downward, this time by the amount of lines contained in the new record to be inserted, namely record X. The buffer memory will write record X in the lines which have become available between the record (X-1) which has not moved and the record (X+1) which now stands lower by the length of record X.

It appears that BL and FL of record X will each contain a reference looking toward the contiguous record, BL in the first line looking back to record (X-1), and FL in the last line looking forward to record (X+1). The preceding operations are conducted in response to commands from the user, called "close a file"; "open a file"; "list the directory"; "rewind". With regard to data within a file, the commands are "read"; "write"; "delete"; "insert"; "backspace" and "forspace".

For each operation the pointer will be located at the specified address.

Referring to Fig. 3 the solid state memory is illustratively shown to include four RAM devices of (32K x 4) identified by an address extending from 8000 to $FFFF_x$ and a buffer memory which is also a RAM device of (32K x 4) addressed from 0000 to $7FFF_x$.

In the first page of RAM devices, the directory is followed by the header HF1 of file #1 which contains records of data such as #1, #2, #3, #4 which may be of different or equal length each record has a header HR1, HR2, HR3. Indeed, at any moment the length of any of the files can be lengthened or shortened depending upon whether there has been insertions or deletions of records. Also, file #2 has a header HF2 preceding several records #1, #2, etc...., and so on. Each such record also has a header HR1, HR2,...

The record header HF or HR symbolizes BL of the last line of the preceding record, the error recovery code for (ECC) the data in the record following the header (CC) and FL of the first line of the coming records in the file. When a record X is deleted (or inserted) the header HR is modified accordingly.

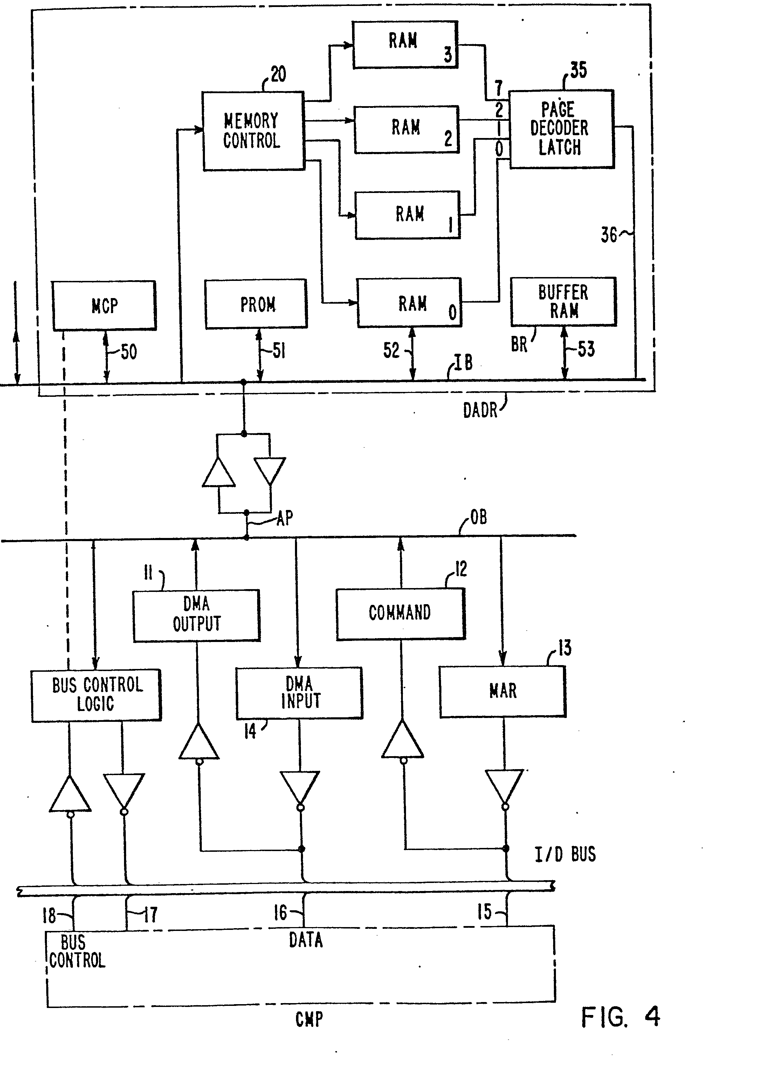

The invention will now be described by reference to Fig. 4 as part of a computer system. Such subsystem is illustrated hereinafter as an external memory card which can be used for instance with a computer numerical control equipment, or a Machine Interface Unit Westinghouse Trademark. The external memory card according to the present invention typically is in the form of a printed circuit card providing 128 K bytes of semiconductor storage. The card plugs into the input/output slot of a computer CMP and is addressed as a peripheral with physical and logical device number. Data transfer to and from the computer is through direct memory access (DMA). The card includes a microprocessor (MCP) (namely CPU's on a chip). The card also includes a RAM memory containing 256 K bytes of memory. The overall card appears as a mass memory storage to the computer CMP. The microprocessor MCP provides with the RAM memory a file management system for accessing sequentially ordered data to and from the RAM. Thus, the sequentially ordered data form records of data classified into several files themselves having a predetermined order. The files may be opened, closed, created, purged and rewound. The records may be read, written, erased and inserted. In the transfer, data can be passed to and from as packed or unpacked.

The semiconductor memory assembly as described herein is interfaced with a W 2500 minicomputer CMP via a DMA I/O channel (11, 14) built around a Z80 (ZILOG Trademark) microprocessor MCP. The W2500 minicomputer CMP and the Z80 microprocessor MCP are well identified as trade names of Westinghouse equipment in the open market. As shown n Fig. 4, the data acquisition and data retrieval system DADR, mainly includes the microprocessor MCP, four sets of random-access-memory (RAM) devices and a programmable-read-only-memory PROM associated with the microprocessor. All devices are interconnected by an internal data bus IB. The connections from MCP, PROM and RAM devices are via lines 50, 51, and 52, to IB.

The I/O bus lines of computer CMP provide access to the card DADR by an interface leading to an outside bus OB itself connected to the internal bus IB through a bidirectional access path AP. Considering the interface between CMP and DADR, the user (or the computer) asks for data to be stored into, or retrieved from, the RAM memory. By lines 16, which are bidirectional, data comes IN or OUT of the computer CMP. By lines 15, which also are bidirectional, commands, or addresses are sent, or received. The

commands of lines 15 are passing through a command interface circuit 12 onto the outside bus OB. Addresses from the RAM memory are received on line 15 from a memory access register (MAR) 13 interfacing with the outside bus OB. For the selection of one of the four sets of RAM devices, a page decoder latch 35 is provided between line 36 from the data bus IB and four-digit lines leading to the four sets of RAMS. In hexadecimal code the addresses range from 8000 to $FFFF_x$. For the location of column and rows in a selected card, a memory control device 20 addresses and scans through columns and rows, also controlled from the data bus IB. The DADR card further includes a Buffer RAM BR for the purpose explained hereinbefore. The addresses for the buffer ram extend from 0000 to $7FFF_x$.

Data IN goes to OB from lines 16 via a direct-memory-access output circuit DMA (at 11), while data OUT is received from OB via a direct-memory-access input circuit DMA (at 14). Since lines 15 and 16 are bidirectional, the direction is qualified by bus control lines 17 (from OB) and 18 (to OB) via the interfacing circuit 10 which establishes a bus control logic. Thus, from line 17 and 18, the system knows whether data on line 16 are data IN or data OUT, and whether signal logics on line 15 are for a command or an address.

Referring to Figs. 5A and 5B, the RAM memory is illustrated as including each on a 32 K x 4 bytes area four pages of information by column and by rows. From the internal bus IB, data going to or coming from the outer bus OB is passed via lines 51 and 38 for a read operation and via lines 51 and 39 for a write operation. At the same time, from line 34, the address indicates by column and by row where inside a particular page the operation is to be performed. Concurrently, via lines 36 and page decoder latch 35, the logic of the instruction allows the selection of the particular page to be operated on.

Special circuits 30 and 31 controlled by lines 32, 33 are provided for addressing the RAM by column (line 32) and row (line 33). These are used to identify where in the memory an operation is to be performed. For the same purpose, memory control circuit 20 indicates what kind of operation is to be performed. Figure 2B shows the control circuit 20 which is used to apply to the data of the addressed RAM page and location the required command, namely: CAS for "column access scan (line 25). RAS for "row access scan" (line 26); REF for "refresh" (line 27). RD x LD for "read and load registers" (line 28). The latter is used when data is to be returned to the microprocessor. At the entry of the control circuit 20, the IB bus sends the instructions: RD for "read" on line 22; WR for "write" on line 24; and "A 0-7", which specifies the column which is to be altogether refreshed.

Referring again to Fig. 4, in operation the computer may ask data to be stored at a particular location inside the RAM memory of the peripheral memory system DADR. To this effect, 16-bit data are transmitted via line 16 and circuit 11, while a 16-bit command via line 15 and circuit 12 is applied to the DADR by bus lines OB and IB through intermediary path AP in accordance with the directional instructions of line 16 and bus control logic 10. The command from circuit 12 will cause the microprocessor MCP to address the programmed read-only-memory PROM thereby deriving on line 52 a command which through memory control circuit 20 (Fig. 2B) will cause the data to be treated as indicated. Such control may be to "write", "insert", "erase". Data is written via lines 51 and 39. Conversely, when reading data, the computer CMP will actuate the microprocessor MCP by line 15, and circuit 12. A similar dialogue between microprocessor MCP and the PROM will cause circuit 20 (Fig. 2B) to "read" data at the requested location (line 16 and circuit 11). The extracted data is received from lines 38 and 51 and addressed to the computer CMP by circuit 14 and line 16, while the associ-

ated command is through memory access register 13, and line 15 into the computer.

The hardware shown in block DADR is manufactured as a card supplying all signals. Communication is, as generally known, via direction I/O, DMA, and interrupt.

The card appears to the computer as a mass memory device containing file management functions. The supported functions are: Open, Close, Create, Purge, and Rewind files, Read, Write, Insert, Delete, Backspace and Forspace.

Two search commands are also implemented, one is a "File Search" to search a complete file for a string match. The other is a "Record Search" to search a record for a string match.

Communication between computer CMP and the DADR card is via Handler Control Blocks (HCB) which contain the following data:

 1. Operation Code. This instructs the card to perform one of its functions.

 2. Status. To indicate to the system the state of the card or a file.

 3. Byte Count. This indicates the length of a record for a read or write function.

 4. Buffer Address. The starting buffer address for data transfer.

 5. File Number. Indicates the file to be used in an operation.

 6. Logical Device Number. Indicates to the card the logical channel being used.

Up to 4 users, or computer requests, may access the file simultaneously. To provide protection for multiple users of the same file, a priority must be established among the users. Each of the users, or computer request, will open a file through a logic device channel. Such channel will be used to verify that a user, or computer request, is entitled to access a file in the RAM memory of DADR.

A user may open a file in one of three modes:

Write Mode: This indicates that the file may be written or read through this logical channel.

Read Mode: This file may not be written through this logical channel but may be read by this and other channels and written by some other channel.

Read With Write Lockout: This allows multiple users to read this file but prevents any write to the file.

A maximum of 4 files may be open simultaneously.

A file is edited by:

1. Opening the file in the write mode
2. Read the required record
3. Delete the record
4. Insert the record
5. Close the file when complete

When records are inserted or deleted, the file handler expands or contracts the file to its new size automatically and updates and file pointers as necessary.

Memory Structure

The auxiliary memory is organized as two logical blocks, the directory and the files. The directory contains entries for each of the files in the system. This includes the file starting address in memory, four entries for each file indicating the status of the file, open for Write, Read, Write Lockout, or File Not Open. There is also a logical channel number indicator for each user of the file. For each open file, pointers are maintained to indicate the record being accessed and its memory address. The directory is used only by the File Manager and is transparent to the user. The "list directory" command causs the directory information to be output to indicate the files in the system and the size of each file. The directory expands or contracts, depending on the number of files in the system.

## Error Correction

An error correction code is appended to the directory and to each record of the files. These codes allow the Z80 to correct single bit errors arising in the memory. Double bit errors cannot be corrected but are detected and flagged to the operating system.

## Memory Use

The memory available for use is to be 128K bytes where K is in the binary system equal to 1024, for a total of 131,072 bytes to be used for storage, directory and error correction code. In practice, the memory required for storage in a machine control data (ILCD) as used for numerical control machines amounting to the equivalent of 1,000 ft. of paper tape representing 120,000 bytes. This leaves 11,072 bytes for error correction usage and directory. The directory area is to expand and contract as the number of files changes and commercially is considered as "n" feet of tape for each file. Thus more data can be stored in a few large files than in many small files.

**0038703**

## IDENTIFICATION OF REFERENCE NUMERALS USED IN THE DRAWINGS

| LEGEND | REF. NO. | FIGURE |
|--------|----------|--------|
| DMA OUTPUT | 11 | 4 |
| COMMAND | 12 | 4 |
| MAR | 13 | 4 |
| DMA INPUT | 14 | 4 |
| MEMORY CONTROL | 20 | 4 |
| MEMORY CONTROL | 20 | 5A |
| CAS | 30 | 5A |
| RAS | 31 | 5A |
| PAGE DECODER LATCH | 35 | 4 |
| PAGE DECODER LATCH | 35 | 5A |

17

What we claim is:

1. A peripheral memory system for adding and retrieving data, comprising:

solid state memory means containing a plurality of different groupings of sequential data in a predetermined sequential grouping order;

microprocessor means responsive to a command signal for collective treatment of sequential data belonging to one particular grouping of a particular order;

all stored data belonging to groupings following said one particular grouping being moved in said solid state memory means in response to said command signal by a predetermined number of places forward when the treated sequential data are being added sequentially into said solid state memory means, and restored backward when the treated sequential data are being retrieved from said solid state memory means.

2. The system of claim 1 with a first and a second indicator being associated with any such sequential data stored in said solid state memory means, said first indicator indicating the length of the sequential data grouping immediately preceding a corresponding grouping and said second indicator indicating the length of the sequential data grouping.

3. The system of claim 2 with an auxiliary memory for establishing the first and second indicators of new sequential data being stored in said solid state memory means.

4. The system of claim 3 with said auxiliary memory being used for establishing the first indicator of the immediately preceding grouping and the second indicator of the immediately following grouping when a new sequential data is being stored into said solid state memory means, and when sequential data is being retrieved therebetween.

5. A peripheral memory system for data acquisition and data retrieval providing command signals therefor, wherein the system comprises a microprocessor responsive to said command signals and at least one solid state memory device responsive to said microprocessor for allocating data space, in sequential order and under predetermined data groupings, in accordance with instructions from said command signals via said microprocessor.

6. The system of claim 5 with said command signal and microprocessor providing for the streamlining to said solid state memory of data through a moving operation of subsequent stored data forward in the direction of said sequential order and in the amount of such data addition, and providing for the deletion from said solid state mmory of data through a moving operation of subsequent stored data backward in the direction of said sequential order and in the amount of such data deletion.

7. The system of claim 5 with an auxiliary solid state memory associated with said at least one solid state memory;

with one of said command signals and said microprocessor providing for a retrieval of an entire selected grouping of data from said one solid state memory and for storing of said retrieved grouping of data into said auxiliary solid state memory;

said one command signal and said microprocessor concurrently providing for a compression in a direction backward relative to said sequential order of all data in said one memory subsequent to said retrieved grouping and in an amount equal to the length of said retrieved data grouping.

8. The system of claim 5 with the provision of a directory listing said grouping in a predetermined order reflecting the data groupings as stored, said directory listing being stored in a space allocated in said solid state memory means in front of all said groupings.

9. The system of claim 8 with said allocated space of said groupings of sequential data being expandable in length to accommodate more information and compressible to rejoin the information stored, all the information stored being sequentially stored.

10. The system of claim 2 with consecutive said first and second indicators being associated with an error recovery code header.

11. The system of claim 10 with said microprocessor being programmed in accordance with a polynomial equation.

12. The system of claim 11 with generation of an error solution with data related to a corresponding error recovery code header.

FIG. 5A

MEMORY CONTROL 20

CAS 30

A0-7 32

RAS 31

A8-16 33

RAM

32K×4 PAGES

R    W

34

38    39

PAGE DECODER LATCH

0 1 2 7

35

51

DATA BUS

IB

FIG. 5B

IOR 21
RD 22
WR 23
A0-7 24

MEMORY CONTROL

25 CAS
26 RAS
27
28

FIG. 1

A B

PA

B

FILE X+1

FILE X

A

PI

W R

CONTROLLER C

E A

0038703

1/3

SOLID STATE MEMORY

FIG.2
PROCESS TO CLOSE OR TO OPEN A FILE

FIG.3

FIG. 4